# EUROPÄISCHE PATENTSCHRIFT

(11) **EP 1 406 794 B1**
(45) Veröffentlichungstag und Bekanntmachung des Hinweises auf die Patenterteilung: **04.10.2006**
(21) Anmeldenummer: 02754308.1
(22) Anmeldetag: 03.07.2002
(51) Int. Cl.: B60R 21/34

(54) **FAHRZEUGKAROSSERIE MIT EINER NACHGIEBIG GELAGERTEN FRONTHAUBE**
VEHICLE BODY COMPRISING AN ELASTICALLY MOUNTED BONNET
CARROSSERIE DE VEHICULE COMPRENANT UN CAPOT MONTE POUR POUVOIR ETRE DEFORME

(30) Priorität: 05.07.2001 DE 10132656
(43) Veröffentlichungstag der Anmeldung: 14.04.2004
(60) Teilanmeldung: 06017727.6
(73) Patentinhaber: ADAM OPEL AG, 65423 Rüsselsheim (DE)
(72) Erfinder: BITTMANN, Werner, 65428 Rüsselsheim (DE); SCHMITZ, Alois, 55129 Mainz (DE)
(74) Vertreter: Daniel, Ulrich W.P.
(86) Internationale Anmeldenummer: PCT/DE2002/002419
(87) Internationale Veröffentlichungsnummer: WO 2003/004319

(56) Entgegenhaltungen:
- EP-A- 1 104 728
- WO-A-00/72101
- PATENT ABSTRACTS OF JAPAN vol. 1995, no. 03, 28. April 1995 (1995-04-28) -& JP 06 336179 A (MITSUBISHI MOTORS CORP), 6. Dezember 1994 (1994-12-06)
- PATENT ABSTRACTS OF JAPAN vol. 1999, no. 04, 30. April 1999 (1999-04-30) -& JP 11 020740 A (NISSAN MOTOR CO LTD), 26. Januar 1999 (1999-01-26)
- PATENT ABSTRACTS OF JAPAN vol. 2000, no. 01, 31. Januar 2000 (2000-01-31) -& JP 11 291948 A (HONDA MOTOR CO LTD), 26. Oktober 1999 (1999-10-26)
- PATENT ABSTRACTS OF JAPAN vol. 008, no. 061 (M-284), 23. März 1984 (1984-03-23) -& JP 58 211975 A (NISSAN JIDOSHA KK), 9. Dezember 1983 (1983-12-09)

## Beschreibung

Die Erfindung bezieht sich auf eine Fahrzeugkarosserie mit einer nachgiebig gelagerten Fronthaube, mit jeweils einem Scharnier zwischen der Fahrzeugkarosserie und einem Seitenrand der Fronthaube, damit diese um eine von den Scharnieren definierte Schwenkachse aufgeklappt werden kann, und mit mindestens einer unter Belastung nachgiebigen Baueinheit an jedem Seitenrand zum Lagern der Fronthaube an der Fahrzeugkarosserie, wobei die Baueinheit als eine stabile, aber sich plastisch verformende Crashbox ausgebildet ist, die oberhalb einer bestimmten Belastung während einer stoßartigen Krafteinwirkung nachgibt.

Eine solche Fahrzeugkarosserie ist in der DE 27 11 339 A1 beschrieben. Der dort vorgeschlagenen Lagerung der Fronthaube liegt folgende Überlegung zu Grunde: Es passieren immer wieder Unfälle, bei denen ein Fahrzeug einen die Straße querenden Fußgänger frontal erfasst. Der Körper und der Kopf des Fußgängers schlagen dadurch auf die Fronthaube, wodurch schwere Verletzungen hervorgerufen werden. Deshalb gehen die Bemühungen der Fahrzeughersteller dahin, die Fahrzeugkarosserie und insbesondere den Vorderbau mit der Fronthaube so zu gestalten, dass eine Verletzung zwar nicht ausgeschlossen, wohl aber die Verletzungsschwere gemildert wird. Um insbesondere schwere Kopfverletzungen zu vermeiden, wird die Fronthaube nachgiebig gelagert. Die bei einem Kopfaufschlag auftretenden Kopfverzögerungen sollen dadurch einen zeitlichen Verlauf nehmen, der einen HIC-Wert <1000 aufweist. Der HIC-Wert ist eine Kenngröße, um die gerade noch ertragbare Belastung des menschlichen Kopfes zu beschreiben. Die genaue Definition dieses Wertes kann der Fachliteratur entnommen werden.

Die oben schon erwähnte Offenlegungsschrift schlägt vor, die Fronthaube mittels nachgiebiger, Energie verzehrender Bauelemente an der Fahrzeugkarosserie zu lagern, die zum Teil im Scharnier ausgebildet sind. Wie ein solches Element konkret gestaltet sein könnte, kann der Schrift aber nicht entnommen werden. Außerdem besteht das Problem, dem Element eine ausreichende Grundsteifigkeit zu geben, damit es bei üblichen statischen Belastungen nicht nachgibt, sondern nur bei einer stoßartigen Belastung, wie sie bei einem Körper- bzw. Kopfaufprall auftritt

Einen gattungsgemäßen Stand der Technik zeigt die WO 00/72101. Diese zeigt eine bei stoßartiger Belastung nachgiebige Baueinheit, die im weitesten Sinn als Crashbox angesprochen werden kann. Im Konkreten handelt es sich aber um ein mit einem Langloch versehenes, flaches Blechstück zwischen einem Drehgelenk an einer mit der Motorhaube verbundenen Strebe und einer karosseriefesten Strebe. Das Blechstück besteht aus zwei Laschen, die das Langloch seitlich einschließen.

Die gezeigte Lasche dient nur ungenügend dem Fußgängerschutz, weil die Laschen bei Belastung zur Seite ausknicken und sich dabei einmal falten. Die dabei wirkenden Biegekräfte sind relativ klein, bzw. fallen, je weiter die Faltung fortschreitet, von einem anfänglich hohen Wert rasch ab, so dass die Energieaufnahme insgesamt relativ gering ist. Was bedeutet, dass die Kopfaufschlagsgeschwindigkeit auf den maximalen Verformungsweg der Laschen nicht vollständig abgebaut werden kann, so dass der Kopf zum Schluss ruckartig verzögert wird.

Die Erfindung beruht somit auf dem Problem, das Bauteil so zu gestalten, dass es stabil genug ist, statischen Belastungen standzuhalten, aber nachgiebig genug, um stoßartigen, von einem auf die Motorhaube aufschlagenden Kopf ausgehenden Belastungen ausweichen zu können, so dass ein für den Kopf gerade noch erträgliches Kraftniveau herrscht.

Die Lösung dieses Problems besteht in einer Fahrzeugkarosserie gemäß dem Oberbegriff des Anspruchs 1, die dadurch gekennzeichnet ist, dass die Crashbox aus einem Rohr besteht, dessen Längsachse im Wesentlichen parallel zur Kraftrichtung angeordnet ist und das Rohrkanten aufweist, die durch Seitenflächen miteinander verbunden sind.

Derartige Crashboxen sind in deutlich größerer Dimensionierung bekannt als Halter von Fahrzeugstoßstangen oder als Fahrzeuglängsträger. In der Regel handelt es sich um Rohre mit einem geschlossen quadratischen Querschnitt, die so angeordnet werden, dass sie bei einem Stoß in Längsrichtung belastet werden. Wenn dabei eine bestimme Belastung überschritten wird, knicken die Kanten der Rohre wechselnd nach innen und außen aus, wobei sich die die Kanten verbindenden Seitenflächen in Falten legen. Da diese Vorgänge irreversible sind, wird die dem Stoß innewohnende Energie verzehrt. Da die Kanten dem Rohr an sich eine gewisse Steifigkeit verleihen, kann es durchaus statisch belastetet werden, ohne auszuknicken. Es ist damit geeignet, auch als Träger oder Verbundstrebe innerhalb einer Struktur zu dienen. Durch den rohrartigen Aufbau ergeben sich weitere Parameter, so dass sich die Grundsteifigkeit und die Energieaufnahme bei einer stoßartigen Belastung noch besser aufeinander abstimmen lassen.

Besonders kritisch ist die Lagerung der Fronthaube im Bereich der Scharniere, da dort eine unmittelbare Verbindung zur Fahrzeugkarosserie besteht. In der oben als erstes erwähnten Offenlegungsschrift wird vorgeschlagen, dass das Scharnier mindesten einen drehfedernden Kurbellenker als nachgiebige Baueinheit hat. Einen solchen zu realisieren, ist ziemlich aufwendig. Eine weitere Ausgestaltung der Erfindung sieht daher vor, dass die Crashbox ein integraler Bestandteil des Scharniers ist und dazu zwischen einer oberen Strebe und einer unteren Strebe des Scharniers, die über mindestens einen Klapphebel miteinander verbunden sind, angeordnet ist. Diese Anordnung hat den Vorteil, dass die übliche Bauweise des Scharniers nicht geändert werden braucht. Vielmehr braucht lediglich in den Zwischenraum zwischen den beiden Streben eine Crashbox integriert zu werden.

Es kann aber auch daran gedacht werden, die Crashbox zwischen der unteren Strebe und der Fahrzeugkarosserie anzuordnen. Auch hier ist der Konstruktionsaufwand gering. Das Scharnier als solches kann unverändert bleiben. Lediglich seine Auflage an der Fahrzeugkarosserie muss tiefer gelegt werden, um Platz für die Crashbox zu schaffen.

Bei Scharnieren, die einen kürzeren und einen längeren Klapphebel aufweisen, so dass die Fronthaube beim Aufklappen um eine Schwenkachse geklappt werden kann, die dabei einen Versatz erfährt, wird gemäß der Erfindung vorgesehen, dass die Crashbox nahe den eng beieinander liegenden Gelenken der Klapphebel an der oberen Strebe angeordnet ist, so dass die in das Scharnier eingeleiteten Stoßkräfte optimal aufgenommen werden.

Einarmige Scharniere weisen einen in einem Bogen verlaufenden Klapphebel auf, wobei das eine Ende des Klapphebels mit einer oberen mit der Fronthaube verbundenen Strebe fest verbunden ist, wobei der sich an dieses Ende anschließende vordere Bogenabschnitt in etwa senkrecht zur Fronthaube verläuft und wobei das andere Ende des Klapphebels drehbar an der Karosserie gelagert ist. Für diese Art von Scharnieren bietet sich folgende Lösung an: Die Crashbox ist im vorderen Bogenabschnitt ausgebildet.

Dies hat den Vorteil, dass kein zusätzlicher Bauraum benötigt wird, da lediglich ein bisher steif ausgeführter Abschnitt des Klapphebels eine neue zusätzliche Funktion erhält. Da der vordere Bogenabschnitt des Klapphebels in Aufschlagsrichtung verläuft, muss lediglich dafür gesorgt werden, dass dieser bei einem Aufschlag gestaucht wird, was durch eine Crashbox leicht erreicht werden kann.

Im Folgenden soll die Erfindung anhand von drei Ausführungsbeispielen näher erläutert werden. Dazu zeigen
- Fig. 1: eine erste Ausführungsform, bei dem eine Crashbox im Scharnier angeordnet ist,
- Fig. 2: eine zweite Ausführungsform, bei der eine Crashbox unterhalb eines Scharniers liegt.
- Fig. 3: eine dritte Ausführungsform, bei der eine Crashbox Bestandteil eines Klapphebels des Scharniers ist,
- Fig. 4: eine Variante, die nicht Teil der Erfindung ist, bei der die Crashbox durch Schwächung des Klapphebels erzielt ist.

Beide Figuren zeigen ein Scharnier 1 für eine Fronthaube, die hier nicht näher dargestellt ist. Das Scharnier 1 besteht aus einer oberen Strebe 2, die mit der Fronthaube verschweißt oder verschraubt ist, und einer unteren Strebe 3, die mit der Fahrzeugkarosserie verschraubt ist. Zwischen den beiden Streben 2, 3 erstrecken sich zwei Klapphebel 4, 5, die jeweils in Gelenken 6, 6', 7, 7' drehbar an den Streben 2, 3 gelagert sind. Damit beim Aufklappen die Fronthaube sich nach oben und nach vorne bewegt, um eine Kollision ihrer hinteren Kante mit einem die Fronthaube einfassenden Rahmen zu vermeiden, ist der eine Klapphebel 4 länger als der andere Klapphebel 5 und die Gelenke 6, 6' an der oberen Strebe 2 enger zusammen als die Gelenke 7, 7' an der unteren Strebe 3. Auf diese Weise erfährt die Schwenkachse der Fronthaube beim Aufklappen einen Versatz nach vorne.

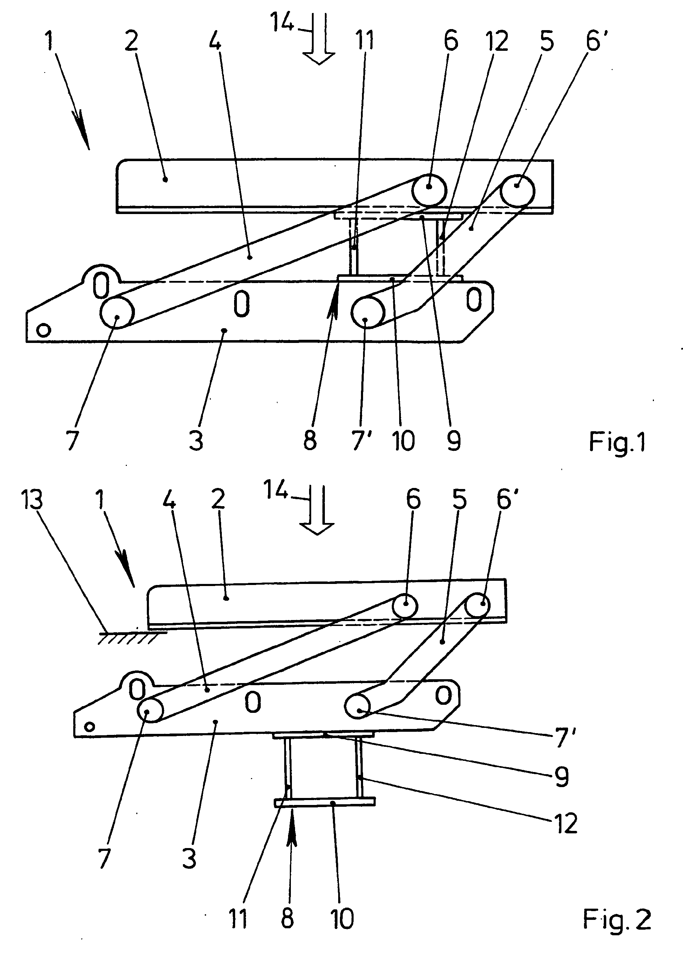

Gemäß der Ausführung nach Fig. 1 befindet sich zwischen den beiden Streben 2, 3 im Bereich der nah beieinander liegenden Gelenke 6, 6' an der oberen Strebe 2 eine Crashbox 8. Diese besteht aus einer oberen Platte 9 und einer unteren Platte 10, die flächig an den Streben 2, 3 anliegen. Zwischen den Platten 9, 10 erstrecken sich parallel und beabstandet zueinander zwei Stützwände 11, 12, die senkrecht zu den Streben 2, 3 ausgerichtet sind. Die untere Platte 10 ist mit der unteren Strebe 3 verschweißt. Die obere Platte 9 bildet einen Anschlag für die obere Strebe 2, wodurch die Schließlage des Scharniers 1 definiert ist.

Gemäß der Ausführung nach Fig. 2 befindet sich die Crashbox 8 zwischen der unteren Strebe 3 und der Fahrzeugkarosserie, wozu diese einen hier nicht näher dargestellten Absatz aufweist. Die Schließlage der Fronthaube und damit die Schließlage des Scharniers 1 wird durch Anschläge gewährleistet. Ein Anschlag 13 ist in Fig. 2 schematisch dargestellt.

Die Ausführung der Crashbox 8 ist in beiden Fällen gleich. In beiden Fällen können die beiden Stützwände 11, 12 auch durch weitere Stützwände ergänzt werden. Diese können parallel zu den gezeigten stehen aber auch senkrecht dazu und mit diesen ein im Querschnitt quadratisches Rohr bilden.

Wenn ein Körper auf die Fronthaube schlägt, wird eine stoßartige Kraft auf das Scharnier 1 gemäß dem Pfeil 14 ausgeübt. Die Kräfte werden über die obere Strebe 2 auf die Crashbox 8 übertragen, wodurch die Stützwände 11, 12 nach außen oder innen irreversibel ausbeulen und dabei Verformungsenergie aufnehmen. Die Dicke und die laterale Ausdehnung der Stützwände 11, 12 bestimmen den dabei auftretenden Verzögerungsverlauf, der in Übereinstimmung mit dem zu erzielenden HIC-Wert gebracht werden kann.

Bei der Ausführung nach Fig. 2 gibt unter der Wirkung des Kopfaufschlages gemäß Pfeil 14 zunächst der Anschlag 13 nach. Die beiden Streben 2, 3 werden unter Durchbiegung der Klapphebel 4, 5 aneinander gelegt, so dass das gestauchte Scharnier 1 gegen die Crashbox 8 gedrückt wird, die - wie oben beschrieben - unter einem definierten Verzögerungsverlauf nachgibt.

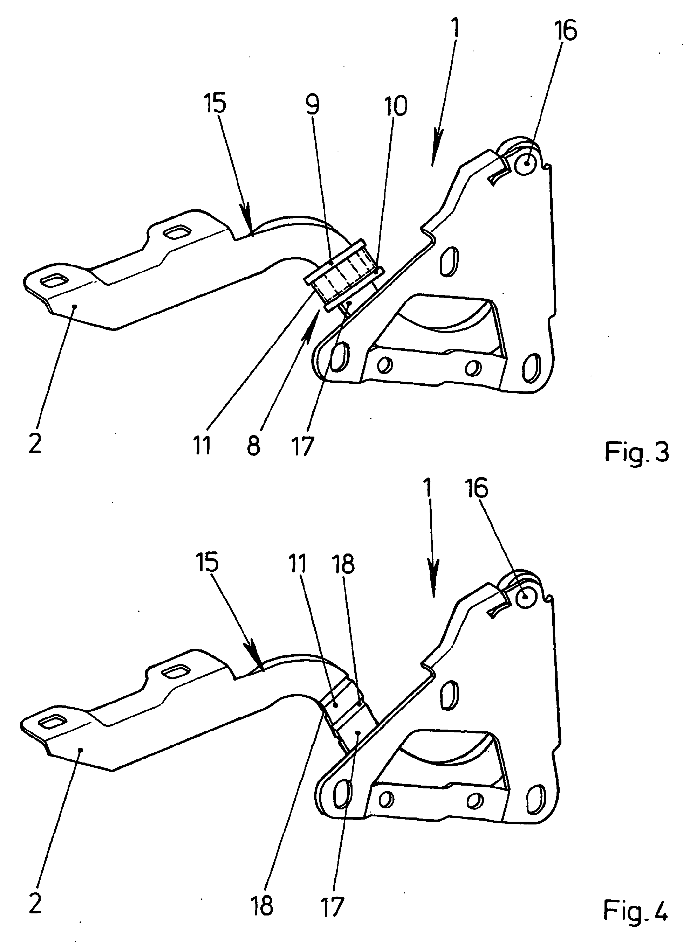

In Figur 3 ist eine Ausführung der Erfindung für ein Scharnier 1 mit einem Klapphebel 15 dargestellt. Typischerweise weist dieser eine Bogenform auf, so dass das Scharniergelenk 16 unterhalb eines Karosserieblechs in Verlängerung der Fronthaube angeordnet werden kann. Beim Aufklappen der Fronthaube greift der Klapphebel 15 mit seiner Bogenform um die der Fronthaube zugewandten Kante des Karosserieabschnittes herum.

Da der vordere Bogenabschnitt 17 in der geschlossenen Stellung der Fronthaube in etwa senkrecht - also in Richtung des Kopfaufschlages - verläuft, ist er geeignet, eine energieabsorbierende Einrichtung oder Crashbox 8 aufzunehmen. Eine Lösung, bei der die Crashbox 8 Stützwände 11 aufweist, ist in Fig. 3 dargestellt. Dazu ist der Klapphebel 15 im vorderen Bogenabschnitt 17 aufgetrennt und die Crashbox 8 mit mehreren, parallel zueinander verlaufenden Stützwänden 11 eingesetzt, die sich zwischen zwei Platten 9, 10 erstrecken, mit deren Außenseiten die beiden Enden der Auftrennung mit der Crashbox 8 verbunden sind.

Eine weitere Variante einer Crashbox die nicht Teil der Erfindung ist, ist in der Fig. 4 dargestellt. Die Crashbox 8 besteht aus einer einzigen Stützwand 11, die ein Abschnitt des Klapphebels 15 ist. Um die gewünschte Nachgiebigkeit zu erhalten, wird die Stützwand 11, das heißt ein entsprechender Abschnitt im vorderen Bogenabschnitt 17 des Klapphebels 15, zu beiden Seiten mit quer verlaufenden Sicken 18 versehen, die bewirken, dass der Klapphebel 15 bei einer stoßartigen Belastung ziehharmonikaartig gestaucht wird.

### Bezugszeichenliste

- 1: Scharnier
- 2: obere Strebe
- 3: untere Strebe
- 4: Klapphebel
- 5: Klapphebel
- 6, 6': Gelenk
- 7, 7': Gelenk
- 8: Crashbox
- 9: Platte
- 10: Platte
- 11: Stützwand
- 12: Stützwand
- 13: Anschlag
- 14: Pfeil

- 15: Klapphebel
- 16: Scharniergelenk
- 17: vordere Bogenabschnitt
- 18: Sicken

## Patentansprüche

1. Fahrzeugkarosserie mit einer nachgiebig gelagerten Fronthaube, mit jeweils einem Scharnier (1) zwischen der Fahrzeugkarosserie und einem Seitenrand der Fronthaube, damit diese um eine von den Scharnieren (1) definierte Schwenkachse aufgeklappt werden kann, und mit mindestens einer unter Belastung nachgiebigen Baueinheit an jedem Seitenrand zum Lagern der Fronthaube an der Fahrzeugkarosserie, wobei die Baueinheit als eine stabile aber sich plastisch verformende Crashbox (8) ausgebildet ist, die oberhalb einer bestimmten Belastung während einer stoßartigen Krafteinwirkung nachgibt, **dadurch gekennzeichnet, dass** die Crashbox (8) aus einem Rohr besteht, dessen Längsachse im Wesentlichen parallel zur Kraftrichtung angeordnet ist und das Rohrkanten aufweist, die durch Seitenflächen miteinander verbunden sind.

2. Fahrzeugkarosserie nach Anspruch 1, **dadurch gekennzeichnet, dass** die Crashbox (8) aus einem im Querschnitt quadratischen Rohr besteht.

3. Fahrzeugkarosserie nach einem der vorhergehenden Ansprüche, **dadurch gekennzeichnet, dass** die Crashbox (8) ein integraler Bestandteil des Scharniers (1) ist und dazu zwischen einer oberen Strebe (2) und einer unteren Strebe (3) des Scharniers (1), die über mindestens einen Klapphebel (4, 5) miteinander verbunden sind, angeordnet ist.

4. Fahrzeugkarosserie nach Anspruch 1 oder 2, **dadurch gekennzeichnet, dass** die Crashbox (8) zwischen einer unteren Strebe (3) des Scharniers (1) und der Fahrzeugkarosserie angeordnet ist.

5. Fahrzeugkarosserie nach Anspruch 3, **dadurch gekennzeichnet, dass** zwischen der oberen und der unteren Strebe (2, 3) ein kürzerer und ein längerer Klapphebel (4, 5) angeordnet ist, wobei die Klapphebel (4, 5) relativ eng nebeneinander an der oberen Strebe über Gelenke (6, 6') befestigt sind, und dass die Crashbox (8) nahe den eng beieinander liegenden Gelenken (6, 6') angeordnet ist.

6. Fahrzeugkarosserie nach Anspruch 1 oder 2, **dadurch gekennzeichnet, dass** das Scharnier (1) einen in einem Bogen verlaufenden Klapphebel (15) aufweist, wobei das eine Ende des Klapphebels (15) mit einer oberen Strebe (2) fest verbunden ist, wobei der sich daran anschließende vordere Bogenabschnitt (17) in etwa senkrecht zur Fronthaube verläuft und wobei das andere Ende des Klapphebels (15) drehbar an der Karosserie gelagert ist und die Crashbox (8) im vorderen Bogenabschnitt (17) ausgebildet ist.

## Claims

1. Vehicle body having a flexibly mounted bonnet, having a hinge (1) between the vehicle body and each side edge of the bonnet to allow the bonnet to be hinged open about a pivotal axis defined by the hinges (1), and having at each side edge at least one constructional unit that yields under load for mounting the bonnet on the vehicle body, wherein the constructional unit is designed as a stable but plastically deforming crash box (8), which yields above a specific load during an impact-like action of force, **characterized in that** the crash box (8) comprises a tube, the longitudinal axis of which is disposed substantially parallel to the direction of force and which has tube edges that are connected to one another by lateral surfaces.

2. Vehicle body according to claim 1, **characterized in that** the crash box (8) comprises an, in cross section, square tube.

3. Vehicle body according to one of the preceding claims, **characterized in that** the crash box (8) is an integral component of the hinge and for this purpose is disposed between a top strut (2) and a bottom strut (3) of the hinge (1), which are connected to one another by at least one folding lever (4, 5).

4. Vehicle body according to claim 1 or 2, **characterized in that** the crash box (8) is disposed between a bottom strut (3) of the hinge (1) and the vehicle body.

5. Vehicle body according to claim 3, **characterized in that** a shorter and a longer folding lever (4, 5) are disposed between the top and the bottom strut (2, 3), wherein the folding levers (4, 5) are fastened relatively closely adjacent to one another by joints (6, 6') to the top strut, and that the crash box (8) is disposed near the closely adjacent joints (6, 6').

6. Vehicle body according to claim 1 or 2, **characterized in that** the hinge (1) comprises a folding lever (15) extending in an arc, wherein the one end of the folding lever (15) is connected in a fixed manner to a top strut (2), wherein the front arc portion (17) adjoining said end extends approximately perpendicularly to the bonnet and wherein the other end of the folding lever (15) is mounted rotatably on the body and the crash box (8) is formed in the front arc portion (17).

## Revendications

1. Carrosserie de véhicule avec un capot avant monté de façon à être déformable, avec chaque fois une charnière (1) entre la carrosserie de véhicule et un bord latéral du capot avant, afin que celui-ci puisse être ouvert par rabattement autour d'un axe de pivotement défini par les charnières (1), et avec au moins un composant déformable sous charge sur chaque bord latéral, pour le montage en palier du capot avant sur la carrosserie du véhicule, le composant étant réalisé sous la forme de boîte de collision (8), stable mais se déformant de façon plastique, et qui se déforme en cas de dépassement d'une sollicitation déterminée sous l'effet d'une force provoquée par un choc, **caractérisée en ce que** la boîte de collision (8) est formée d'un tube dont l'axe longitudinal est disposé sensiblement parallèlement à la direction de la force et présentant des bords de tubes reliés ensemble par des surfaces latérales.

2. Carrosserie de véhicule selon la revendication 1, **caractérisée en ce que** la boîte de collision (8) est formée d'un tube à section transversale carrée.

3. Carrosserie de véhicule selon l'une des revendications précédentes, **caractérisée en ce que** la boîte de collision (8) est un composant intégral de la charnière (1) disposé à cet effet entre une entretoise supérieure (2) et une entretoise inférieure (3) de la charnière (1), qui sont reliées ensemble par l'intermédiaire d'au moins un levier de rabattement (4, 5).

4. Carrosserie de véhicule selon la revendication 1 ou 2, **caractérisée en ce que** la boîte de collision (8) est disposée entre une entretoise inférieure (3) de la charnière (1) et la carrosserie de véhicule.

5. Carrosserie de véhicule selon la revendication 3, **caractérisée en ce qu'**entre les entretoises supérieure et inférieure (2, 3) sont disposés un levier de basculement plus court et un plus long (4, 5), les leviers de basculement (4, 5) étant fixés l'un à côté de l'autre relativement étroitement sur l'entretoise supérieure, par des articulations (6, 6'), et **en ce que** la boîte de collision (8) est disposée à proximité des articulations (6, 6') placées étroitement l'une près de l'autre.

6. Carrosserie de véhicule selon la revendication 1 ou 2, **caractérisée en ce que** la charnière (1) présente un levier de basculement (15) s'étendant selon un arc, une extrémité du levier de basculement (15) étant relié rigidement à une entretoise supérieure (2), **en ce que** le tronçon d'arc avant (17) s'y raccordant s'étend à peu près perpendiculairement au capot avant, et l'autre extrémité du levier de basculement (15) est montée à rotation sur la carrosserie, et la boîte de collision (8) est réalisée dans le tronçon d'arc avant (17).
